Europäisches Patentamt

European Patent Office

Office européen des brevets

(19)

(11) Veröffentlichungsnummer: **0 248 179**
**A2**

(12) **EUROPÄISCHE PATENTANMELDUNG**

(21) Anmeldenummer: **87105657.8**

(22) Anmeldetag: **16.04.87**

(51) Int. Cl.4: **H01S 3/08** , H01S 3/105

(30) Priorität: **21.05.86 DE 3617084**

(43) Veröffentlichungstag der Anmeldung:
**09.12.87 Patentblatt 87/50**

(84) Benannte Vertragsstaaten:
**AT BE CH DE ES FR GB GR IT LI LU NL SE**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Wondrazek, Fritz**
**Riegelstrasse 27**
**D-8068 Pfaffenhofen(DE)**
Erfinder: **Hahn, Andreas**
**Ringbergstrasse 12**
**D-8029 Sauerlach(DE)**
Erfinder: **Frank, Frank, Dr.**
**Sarreiterweg 13**
**D-8017 Ebersberg(DE)**

(54) **Laser mit umschaltbarer Emissionswellenlänge.**

(57) Zum Betrieb eines Lasers in verschiedenen Wellenlängen ist mindestens einer der beiden Spiegel des Oszillators in zwei oder mehrer Bereiche (3.1, 3.2) mit unterschiedlichem spektralen Reflexionsvermögen eingeteilt, wobei jeder Bereich nur eine der Emissionswellenlängen des Lasermediums reflektiert und für die übrigen Emissionswellenlängen weitgehend durchlässig ist. Jeder derartige Bereich ist getrennt in den Strahlengang (4) des Lasers einschiebbar.

FIG. 1

# Laser mit umschaltbarer Emissionswellenlänge

Die Erfindung betrifft einen Laser mit einem in mindestens zwei Emissionswellenlängen aktivierbaren Lasermedium, welches zwischen zwei sich gegenüberstehenden planparallelen und/oder sphärischen Spiegeln angeordnet ist, und wobei einer der Spiegel in mindestens einer Emissionswellenlänge teildurchlässig ist, und der andere Spiegel mindestens eine der Emissionswellenlängen total reflektiert.

Aus der Zeitschrift "Lasers & Applications", September 1984, S. 148 ff. ist ein Neodym-YAG-Laser bekannt, dessen Emissionswellenlänge zwischen den Werten 1,06 $\mu$m und 1,32 $\mu$m umschaltbar ist. Dies geschieht mittels optoelektronischer Mittel, welche zwischen dem Lasermedium und dem total reflektierenden Spiegel angeordnet sind. Die optoelektronischen Mittel bestehen im wesentlichen aus einem doppelbrechenden Kristall und einer Pockelszelle. Der "ordentliche" Strahl des doppelbrechenden Kristalles besitzt die Wellenlänge 1,06 $\mu$m und der intensitätsschwächere, "außerordentliche" Strahl die Wellenlänge 1,32 $\mu$m. Durch Ansteuerung der nachgeschalteten Pockelszelle erfährt die Strahlung eine Drehung der Polarisationsrichtung um 45° bei jedem Durchgang, so daß insgesamt eine Phasenverschiebung von 90° zustandekommt. Je nach Ansteuerung kann also entweder der "ordentliche" oder der "außerordentliche" Strahl den als Polarisator wirkenden doppelbrechenden Kristall durchlaufen, für den jeweils anderen Strahl und damit für die jeweils andere Wellenlänge bleibt der Strahlengang gesperrt.

Die obengenannte Einrichtung ist relativ aufwendig und vermindert zudem den Wirkungsgrad des Lasers nicht un erheblich. Es ist daher Aufgabe der Erfindung, einen Laser mit einem in mindestens zwei Emissionswellenlängen aktivierbaren Lasermedium zu schaffen, der auf einfache Weise zwischen den unterschiedlichen Emissionswellenlängen umschaltbar ist und einen hohen Wirkungsgrad bei den jeweiligen Emissionswellenlängen aufweist.

Diese Aufgabe wird durch einen nach den kennzeichnenden Merkmalen des Patentanspruchs 1 ausgebildeten Laser gelöst.

Besonders vorteilhaft läßt sich die Erfindung auf einen Neodym-YAG-Laser anwenden, dessen teildurchlässiger Spiegel planparallel und in zwei Bereiche aufgeteilt ist, von denen der eine Bereich bei der Wellenlänge $\lambda_1$ = 1,06 $\mu$m und der andere bei der Wellenlänge $\lambda_2$ = 1.32 $\mu$m ein hohes Reflexionsvermögen aufweist. Das Reflexionsvermögen der einzelnen Teilbereiche muß dabei so schmalbandig sein, daß die jeweils andere Wellenlänge nicht mehr erfaßt wird; d.h. also, daß derjenige Spiegelbereich, der die Wellenlänge $\lambda_1$ = 1.06 $\mu$m reflektiert, die Wellenlänge $\lambda_2$ = 1,32 $\mu$m weitestgehend durchläßt, und umgekehrt.

Die Erfindung wird im folgenden anhand eines teilweise schematisch dargestellten Ausführungsbeispieles näher beschrieben.
Es zeigen:

Fig. 1 den schematischen Aufbau eines Laser mit zwei Emissionswellenlängen;

Fig. 2 einen verschiebbaren teildurchlässigen Spiegel mit zwei Bereichen mit unterschiedlichem spek tralen Reflexionsvermögen.

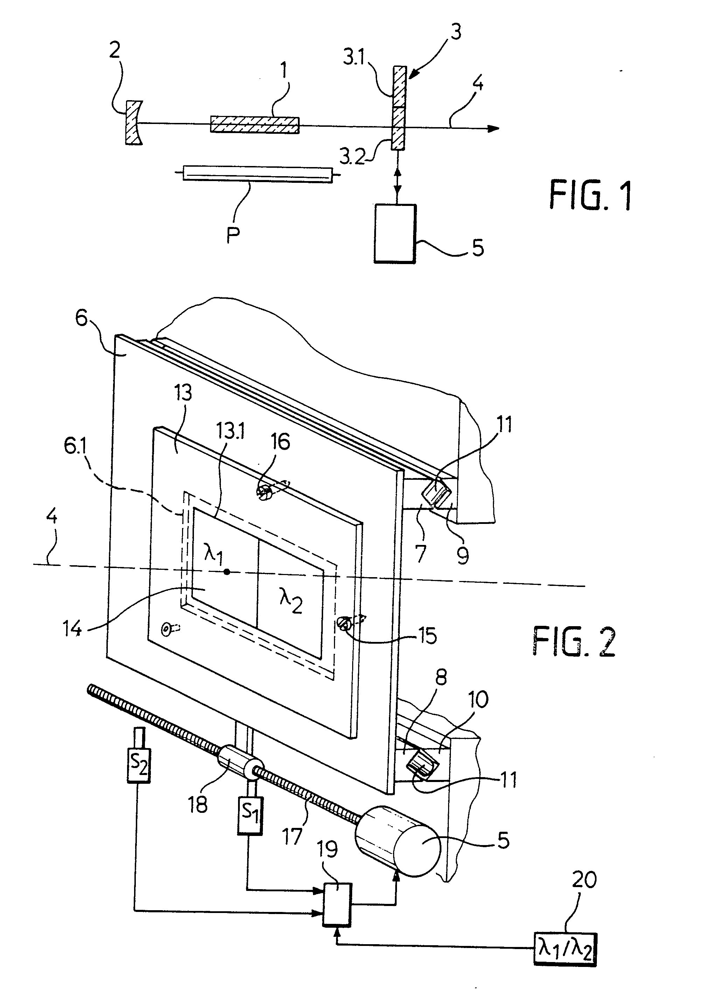

Fig. 1 zeigt den Aufbau eines Lasers mit einem Lasermedium 1, z.B. einem Neodym-YAG-Kristall, der zwei ausgeprägte Emissionswellenlängen bei $\lambda_1$ = 1,06 $\mu$m und $\lambda_2$ = 1,32 $\mu$m aufweist. Das Lasermedium 1 ist in bekannter Weise zwischen zwei Spiegeln 2 und 3 angeordnet, von denen der Spiegel 2 sphärisch gekrümmt und sowohl bei der Wellenlänge $\lambda_1$ als auch bei der Wellenlänge $\lambda_2$ ein nahezu 100 %iges Reflexionsvermögen aufweist. Die Anregung des Lasermediums geschieht in bekannter Weise mittels einer Pumplichtquelle P.

Der Spiegel 3 weist zwei planparallele Bereiche 3.1 und 3.2 auf, von denen jeweils einer in den Strahlengang 4 mittels eines Antriebes 5 einschiebbar ist. Der Bereich 3.1 weist eine dielektrische Beschichtung auf, die die Wellenlänge $\lambda_1$ = 1,06 $\mu$m in einem hohen Maße reflektiert und zur Auskopplung des Laserstrahles einen geringen Anteil davon durchläßt. Für die Wellenlänge $\lambda_2$ = 1,32 $\mu$m ist der Bereich 3.1 weitgehend durchlässig, so daß ein Anschwingen des Lasermediums bei dieser Wellenlänge vermieden wird; das Transmissionsvermögen sollte dazu mindestens 90 % betragen. Die Beschichtung des Bereiches 3.2 ist eintsprechend für eine Oszillation bei der Wellenlänge $\lambda_2$ = 1,32 $\mu$m ausgelegt, mit einem bei dieser Wellenlänge relativ hohen Reflexionsvermögen und entsprechen hohem Transmissionsvermögen bei der Wellenlänge $\lambda_1$ = 1,06 $\mu$m.

Fig. 2 zeigt den Aufbau eines mittels eines Motors 5 verschiebbaren teildurchlässigen Spiegel 14 mit zwei Bereichen mit unterschiedlichem spektralen Reflexionsvermögen. An einem ersten biegesteifen Rahmen 6 sind zwei Führungsschienen 7 und 8 mit präzise ge schliffenen prismatischen Laufflächen angeordnet, denen zwei entsprechende Schienen 9 und 10, die gerätefest montiert sind, gegenüberliegen. Die Schienen 7 und 9 bzw. 8 und 10 sind gegeneinander verspannt, so daß mittels dazwischen befindlicher Rollen 11 and 12 eine spielfreie Führung zustandekommt. Der Rahmen 6 weist eine innere Öffnung 6.1 auf, die von einem zweiten Rahmen 13 abgedeckt wird. Der zweite Rahmen 13 besitzt eine Fensteröffnung 13.1 auf, in die eine planparallele Glasplatte 14 eingelassen ist, die zwei horizontal nebeneinanderliegende Bereiche mit unterschiedlichem spektralen Reflexionsvermögen für die Wellenlängen $\lambda_1$ und $\lambda_2$ aufweisen. Der so ausgebildete, teildurchlässige Spiegel 14 wird mittels zweier Stellschrauben 15 und 16 am Rahmen 13 exakt senkrecht zum Strahlengang 4 ausgerichtet. Der Wechsel des spektralen Reflexionsvermögens des Spiegels 14 und damit das Umschalten des Lasers auf die jeweils andere Emissionswellenlänge geschieht durch Verschiebung des Rahmens 6 mittels eines Motors 5, einer Gewindespindel 17 und einer am Rahmen 6 befestigen Führungsmuffe 18. Die Endpositionen des Rahmens 6 werden durch zwei Berührungsschalter $S_1$ und $S_2$ realisiert, welche durch die Muffe 18 betätigt werden. Die Wahl der Betriebswellenlänge erfolgt mittels eines Hand-oder Fußschalters 20, der zusammen mit den Schaltern $S_1$ und $S_2$ auf eine Motorsteuerung 19 einwirkt, welche Start und Stop sowie die Laufrichtung des Motors 5 steuert.

**Ansprüche**

1. Laser mit einem in mindestens zwei Emissionswellenlängen aktivierbaren Lasermedium, welches zwischen zwei sich gegenüberstehenden planparallelen und/oder sphärischen Spiegeln angeordnet ist und wobei einer der Spiegel in mindestens einer Emissionswellenlänge teildurchlässig ist, und der andere Spiegel mindestens eine der Emissionswellenlängen total reflektiert, dadurch **gekennzeichnet,** daß mindestens einer der Spiegel (3,14) mindestens zwei Bereiche (3.1, 3.2) mit unterschiedlichem spektralen Reflexionsvermögen aufweist, derart, daß jeder Bereich nur eine der Emissionswellenlängen reflektiert und für die übrigen Emissionswellenlängen weitgehend durchlässig ist und, daß jeder Bereich getrennt in den Strahlengang (4) des Lasers einschiebbar ist.

2. Laser nach Anspruch 1, dadurch **gekennzeichnet,** daß als Lasermedium (1) ein Neodym-YAG-Kristall verwendet wird und mindestens einer der Spiegel (3,14) zwei Bereich (3.1, 3.2) aufweist, von denen einer bei der Wellenlänge $\lambda_1 = 1,06\ \mu m$ und der andere bei der Wellenlänge $\lambda_2 = 1,32\ \mu m$ ein hohes, schmalbandiges Reflexionsvermögen aufweist.

3. Laser nach Anspruch 1 oder 2, dadurch **gekennzeichnet,** daß der Spiegel (3,14) mit den Bereichen (3.1, 3.2) mit unterschiedlichem spektralen Reflexionsvermögen zur Auskopplung der Laserstrahlung teildurchlässig ist.

4. Laser nach einem der Ansprüche 1 bis 3, dadurch **gekennzeichnet,** daß der teildurchlässige Spiegel (3, 14) planparallel ausgebildet ist und zwei nebeneinander angeordnete Bereiche (3.1, 3.2) mit unterschiedlichem spektralen Reflexionsvermögen aufweist und, daß der Spiegel (3, 14) auf einem Schlitten mit Präzisionsführung (7 bis 12) angeordnet und mittels eines Antriebes (5) senkrecht zum Strahlengang (4) des Lasers verschiebbar ist.

FIG. 1

FIG. 2